# EUROPÄISCHE PATENTSCHRIFT

(11) **EP 3 653 033 B1**
(45) Veröffentlichungstag und Bekanntmachung des Hinweises auf die Patenterteilung: **19.04.2023**
(21) Anmeldenummer: 19202754.8
(22) Anmeldetag: 11.10.2019
(51) Int. Cl.: A01B 71/02, A01B 71/06

(54) **VERFAHREN ZUM BETREIBEN EINER ZAPFWELLE EINES LANDWIRTSCHAFTLICHEN TRAKTORS MIT EINEM ANBAUGERÄTEHUBWERK**
METHOD FOR OPERATING A LIVE POWER TAKE-OFF OF AN AGRICULTURAL TRACTOR WITH AN ATTACHMENT LIFTING SYSTEM
PROCÉDÉ DE FONCTIONNEMENT D'UNE PRISE DE FORCE D'UN TRACTEUR AGRICOLE DOTÉ D'UN MÉCANISME DE LEVAGE D'ÉLÉMENTS RAPPORTÉS

(30) Priorität: 22.10.2018 DE 102018218063
(43) Veröffentlichungstag der Anmeldung: 20.05.2020
(73) Patentinhaber: Deere & Company, Moline, IL 61265 (US)
(72) Erfinder: Hingne, Abhijeet, 68163 Mannheim (DE)
(74) Vertreter: Dehnhardt, Florian Christopher

(56) Entgegenhaltungen:
- EP-A1- 0 443 325
- EP-A2- 0 920 793
- EP-A2- 1 293 113
- WO-A1-2018/148268
- US-B1- 6 205 385

## Beschreibung

Die Erfindung bezieht sich auf ein Verfahren zum Betreiben einer Zapfwelle eines landwirtschaftlichen Traktors mit einem Anbaugerätehubwerk.

In diesem Zusammenhang ist in der WO 2018/148268 A1 ein Verfahren offenbart, bei dem eine Zapfwelle an einem Fahrzeug zur Rasenpflege selbsttätig deaktiviert wird, sobald ein an einem Dreipunkt-Kraftheber des Fahrzeugs angebrachtes Arbeitsgerät über eine für dessen Betrieb zulässige obere Arbeitsposition hinaus angehoben wird. Daneben lässt sich eine für Transportzwecke vorgesehene Kraftheberposition vorgeben, bis zu der ein Anheben des Dreipunkt-Krafthebers bei abgeschalteter Zapfwelle möglich ist.

Aus der DE 197 54 233 A1 geht ferner eine Steuereinrichtung zur Betätigung eines Zapfwellensteuergeräts eines Arbeitsfahrzeugs mit einem Anbaugerätehubwerk hervor, das sich durch Betätigung eines Hubwerksbedienelements anheben bzw. absenken lässt. In einem Automatikmodus schaltet das Zapfwellensteuergerät auf Veranlassung der Steuereinrichtung die Zapfwelle automatisch ab, sofern beim Anheben des Anbaugerätehubwerks eine vorgebbare Hubwerkslage überschritten wird. Umgekehrt wird die Zapfwelle automatisch wiedereingeschaltet, wenn ein Freigabebedienelement in etwa gleichzeitig mit einem auf Veranlassung des Hubwerksbedienelements abgegebenen Absenkbefehl betätigt wird. Die Bedienung eines an dem Anbaugerätehubwerk angebrachten zapfwellenbetriebenen Anbaugeräts lässt sich so vor allem beim Durchfahren eines Vorgewendes wesentlich vereinfachen. Weitergehende Gesichtspunkte, insbesondere solche hinsichtlich einer Verbesserung der Lebensdauer von Antriebskomponenten der Zapfwelle, bleiben hingegen unbeachtet.

Es ist daher Aufgabe der vorliegenden Erfindung, ein Verfahren der eingangs genannten Art dahingehend anzugeben, dass dieses zu einer Verbesserung der Lebensdauer der Antriebskomponenten der Zapfwelle führt.

Diese Aufgabe wird durch ein Verfahren mit den Merkmalen des Patentanspruchs 1 gelöst.

Das Verfahren zum Betreiben einer Zapfwelle eines landwirtschaftlichen Traktors mit einem Anbaugerätehubwerk, einer dem Anbaugerätehubwerk räumlich zugeordneten Zapfwelle, sowie ersten und zweiten Sensormitteln zur Bereitstellung von Betriebsinformationen, die einen Betriebszustand der Zapfwelle sowie eine Betriebsstellung des Anbaugerätehubwerks charakterisieren, sieht vor, dass von einer Kontrolleinheit auf Basis der bereitgestellten Betriebsinformationen eine obere Betriebsstellung des Anbaugerätehubwerks durch Eingreifen in eine Hubwerkssteuerung auf einen maximal zulässigen ersten Höchstwert h_{1,max} begrenzt wird, wenn sich die Zapfwelle außer Betrieb befindet, und auf einen gegenüber dem ersten Höchstwert h_{1,max} niedrigeren zweiten Höchstwert h_{2,max} begrenzt wird, wenn sich die Zapfwelle in Betrieb befindet. Hierbei wird ein unerwünschter Betrieb der Zapfwelle von der Kontrolleinheit durch Eingreifen in eine Zapfwellensteuerung solange unterbunden, wie sich das Anbaugerätehubwerk in einer den zweiten Höchstwert h_{2,max} überschreitenden Betriebsstellung befindet.

Durch entsprechende Vorgabe des zweiten Höchstwerts h_{2,max} kann ein übermäßiges Anheben eines an dem Anbaugerätehubwerk angebrachten Anbaugeräts beim Betrieb der Zapfwelle und damit ein zu erhöhten Antriebsbelastungen der Antriebskomponenten der Zapfwelle führender Fehlstand verhindert bzw. zumindest maßgeblich verringert werden. Zu diesen Antriebskomponenten gehören insbesondere ein Zapfwellengetriebegehäuse, eine ausgangsseitig vorgesehene Kupplung sowie ein Zapfwellenstummel, an dem das Anbaugerät antriebsmäßig über eine Gelenkwelle lösbar angekuppelt ist.

Eine weitere Verschleißreduzierung ergibt sich daraus, dass eine manuelle Inbetriebnahme der Zapfwelle für den Fall ausgeschlossen wird, dass sich das Anbaugerätehubwerk gerade in einer den zweiten Höchstwert h_{2,max} überschreitenden und insofern ungünstigen Betriebsstellung befindet.

Der zweite Höchstwert h_{2,max} hängt letztlich von der Geometrie des betreffenden Anbaugerätehubwerks sowie der räumlichen Anordnung der Zapfwelle gegenüber dem Anbaugerätehubwerk bzw. dem daran angebrachten Anbaugerät ab und beträgt typischerweise 25 bis 50 % des ersten Höchstwerts h_{1,max}. Der erste Höchstwert h_{1,max} ergibt sich dabei aus dem maximal möglichen Verstellbereich des Anbaugerätehubwerks.

Eine Verwendung des erfindungsgemäßen Verfahrens bietet sich insbesondere in Verbindung mit einer Frontzapfwelle bzw. einem Frontanbaugerätehubwerk an, da hier die momentane Betriebsstellung des Anbaugerätehubwerks für den Bediener aus der Fahrerkabine heraus in aller Regel nicht einsehbar ist. Eine unbeabsichtigte Fehleinstellung des Anbaugerätehubwerks beim Betrieb der Zapfwelle kann auf diese Weise verlässlich vermieden werden.

Vorteilhafte Ausgestaltungen des erfindungsgemäßen Verfahrens gehen aus den Unteransprüchen hervor.

Vorzugsweise wird über eine mit der Kontrolleinheit in Verbindung stehende Bedienerschnittstelle ein Fahrerhinweis dahingehend ausgegeben wird, die Betriebsstellung des Anbaugerätehubwerks entsprechend dem zweiten Höchstwert h_{2,max} zu verringern. Die Ausgabe des Fahrerhinweises kann hierbei auf Veranlassung der Kontrolleinheit durch Ansteuerung entsprechender Anzeigeeinrichtungen bzw. Signalerzeuger innerhalb der Fahrerkabine des landwirtschaftlichen Traktors auf optischem und/oder akustischem Wege erfolgen.

Um den Fahrer weitergehend zu entlasten, besteht zusätzlich die Möglichkeit, dass die dem zweiten Höchstwert h_{2,max} entsprechende Verringerung der Betriebsstellung des Anbaugerätehubwerks durch Eingreifen der Kontrolleinheit in die Hubwerkssteuerung automatisiert durchgeführt wird.

Das erfindungsgemäße Verfahren wird im Folgenden anhand der beigefügten Zeichnungen näher erläutert. Es zeigen:
- Fig. 1: einen landwirtschaftlichen Traktor mit einer Vorrichtung zur Durchführung des erfindungsgemäßen Verfahrens, und
- Fig. 2: ein Ausführungsbeispiel des erfindungsgemäßen Verfahrens in Gestalt eines Flussdiagramms.

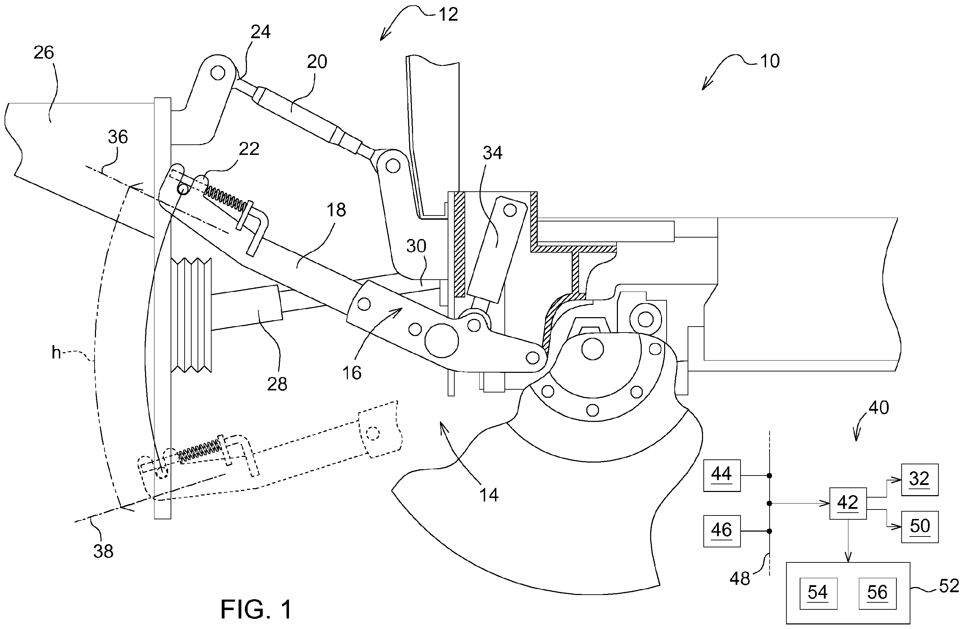

Fig. 1 zeigt eine schematische Teilansicht eines landwirtschaftlichen Traktors mit einer Vorrichtung zur Durchführung des erfindungsgemäßen Verfahrens.

Beispielsgemäß umfasst der landwirtschaftliche Traktor 10 ein als vorderer Dreipunkt-Kraftheber 12 ausgebildetes Frontanbaugerätehubwerk 14 sowie eine dem Frontanbaugerätehubwerk 14 räumlich zugeordnete Frontzapfwelle 16. Die Zapfwelle 16 verläuft mittig zwischen rechten und linken Unterlenkern 18 des Anbaugerätehubwerks, wobei aus Gründen der Darstellung in Fig. 1 lediglich einer der beiden Unterlenker 18 zu sehen ist. Die Unterlenker 18 wie auch ein zentraler Oberlenker 20 umfassen Kupplungshaken 22, 24 zur Anbringung eines landwirtschaftlichen Anbaugeräts 26. Bei dem Anbaugerät 26 handelt es sich beispielsweise um ein Frontmähwerk oder einen Kreiselschwader, wobei das Anbaugerät 26 antriebsmäßig über eine Gelenkwelle 28 an einem von der Zapfwelle 16 umfassten Zapfwellenstummel 30 lösbar angekuppelt ist.

Die Unterlenker 18 können auf Veranlassung einer Hubwerkssteuerung 32 mittels jeweils zugeordneter Hydraulikzylinder 34 vertikal verschwenkt werden, sodass sich das Anbaugerät 26 beim Durchfahren eines Vorgewendes oder zum Zwecke des Transports in eine obere Betriebsstellung 36 anheben und zur Feldbearbeitung in eine untere Betriebsstellung 38 absenken lässt.

Die in dem landwirtschaftlichen Traktor 10 untergebrachte Vorrichtung 40 weist eine mikroprozessorgesteuerte Kontrolleinheit 42 sowie erste und zweite Sensormittel 44, 46 zur Bereitstellung von einen Betriebszustand der Zapfwelle 16 und eine Betriebsstellung des Anbaugerätehubwerks 14 charakterisierenden Betriebsinformationen auf. Die von den ersten Sensormitteln 44 bereitgestellten Betriebsinformationen repräsentieren hierbei den aktuellen Einschaltzustand der Zapfwelle 16, wohingegen die von den zweiten Sensormitteln 46 bereitgestellten Betriebsinformationen den Umfang der vertikalen Verschwenkung der Unterlenker 18 wiedergeben. Die entsprechenden Betriebsinformationen werden der Kontrolleinheit 42 über einen CAN-Datenbus 48 zum Zwecke der Auswertung zugeführt.

Wie in Fig. 1 zu erkennen ist, kommuniziert die Kontrolleinheit 42 ferner mit der Hubwerkssteuerung 32 sowie einer Zapfwellensteuerung 50 des landwirtschaftlichen Traktors 10. Die ersten bzw. zweiten Sensormittel 44, 46 können hierbei Bestandteil der Hubwerkssteuerung 32 bzw. der Zapfwellensteuerung 50 sein.

Eine mit der Kontrolleinheit 42 in Verbindung stehende Bedienerschnittstelle 52 ermöglicht die Ausgabe eines Fahrerhinweises. Die Ausgabe des Fahrerhinweises kann durch Ansteuerung entsprechender Anzeigeeinrichtungen 54 bzw. Signalerzeuger 56 innerhalb einer Fahrerkabine des landwirtschaftlichen Traktors 10 auf optischem und/oder akustischem Wege erfolgen.

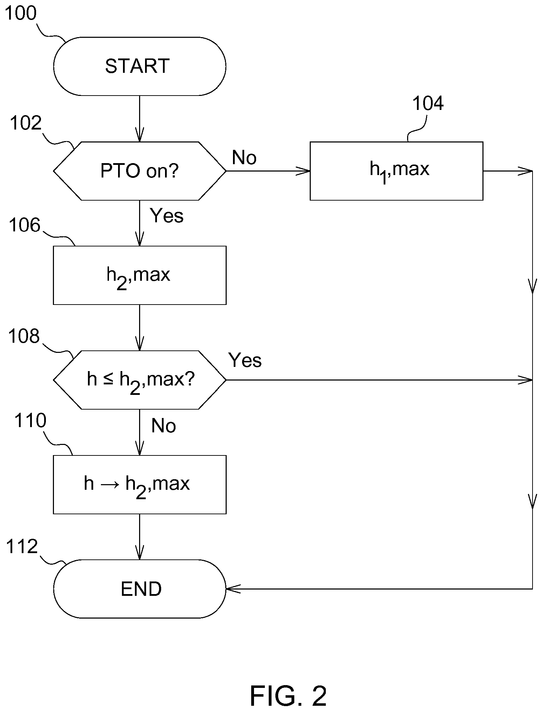

Fig. 2 zeigt ein Ausführungsbeispiel des erfindungsgemäßen Verfahrens in Gestalt eines Flussdiagramms.

Das von der Kontrolleinheit 42 ausgeführte Verfahren wird in einem Initialisierungsschritt 100 bei Inbetriebnahme des landwirtschaftlichen Traktors 10 gestartet, woraufhin auf Basis der von den ersten Sensormitteln 44 bereitgestellten Betriebsinformationen der Betriebszustand der Zapfwelle 16 überprüft wird (PTO bzw. power take-off on). Stellt die Kontrolleinheit 42 fest, dass sich diese außer Betrieb befindet, so wird in einem zweiten Schritt 104 die obere Betriebsstellung 36 des Anbaugerätehubwerks 14 durch Eingreifen in die Hubwerkssteuerung 32 auf einen maximal zulässigen ersten Höchstwert h_{1,max} begrenzt. Anschließend wird das Verfahren in einem Schlussschritt 112 beendet.

Ergibt sich im ersten Schritt 102 hingegen, dass sich die Zapfwelle 16 in Betrieb befindet, mithin das Anbaugerät 26 eine zapfwellenbetriebene Arbeitsfunktion ausführt, so wird in einem dritten Schritt 106 die obere Betriebsstellung 36 des Anbaugerätehubwerks 14 durch Eingreifen in die Hubwerkssteuerung 32 auf einen gegenüber dem ersten Höchstwert h_{1,max} niedrigeren zweiten Höchstwert h_{2,max} begrenzt.

In einem nachfolgenden vierten Schritt 108 wird von der Kontrolleinheit 42 überprüft, ob die aktuelle Betriebsstellung h des Anbaugerätehubwerks 14 kleiner oder gleich dem zweiten Höchstwert h_{2,max} ist (h ≤ h_{2,max}) . Trifft dies zu, so wird das Verfahren im Schlussschritt 112 beendet. Andernfalls wird mit einem fünften Schritt 110 fortgefahren, in dem über die mit der Kontrolleinheit 42 in Verbindung stehende Bedienerschnittstelle 52 ein Fahrerhinweis dahingehend ausgegeben wird, die Betriebsstellung des Anbaugerätehubwerks 14 entsprechend dem zweiten Höchstwert h_{2,max} zu verringern. Optional wird dies durch Eingreifen der Kontrolleinheit 42 in die Hubwerkssteuerung 32 automatisiert durchgeführt. Anschließend wird das Verfahren im Schlussschritt 112 beendet.

Der Vollständigkeit halber sei angemerkt, dass eine Verwendung des erfindungsgemäßen Verfahrens nicht notwendigerweise auf ein Frontanbaugerätehubwerk beschränkt ist. Vielmehr kann es sich auch um ein Heckanbaugerätehubwerk in Gestalt eines hinteren Dreipunkt-Krafthebers handeln.

## Patentansprüche

1. Verfahren zum Betreiben einer Zapfwelle eines landwirtschaftlichen Traktors mit einem Anbaugerätehubwerk, einer dem Anbaugerätehubwerk (14) räumlich zugeordneten Zapfwelle (16), sowie ersten und zweiten Sensormitteln (44, 46) zur Bereitstellung von Betriebsinformationen, die einen Betriebszustand der Zapfwelle (16) sowie eine Betriebsstellung des Anbaugerätehubwerks (14) charakterisieren, wobei von einer Kontrolleinheit (42) auf Basis der bereitgestellten Betriebsinformationen eine obere Betriebsstellung (36) des Anbaugerätehubwerks (14) durch Eingreifen in eine Hubwerkssteuerung (32) auf einen maximal zulässigen ersten Höchstwert (h_{1,max}) begrenzt wird, wenn sich die Zapfwelle (16) außer Betrieb befindet, und auf einen gegenüber dem ersten Höchstwert (h_{1,max}) niedrigeren zweiten Höchstwert (h_{2,max}) begrenzt wird, wenn sich die Zapfwelle (16) in Betrieb befindet, wobei ein Betrieb der Zapfwelle (16) von der Kontrolleinheit (42) durch Eingreifen in eine Zapfwellensteuerung (50) solange unterbunden wird, wie sich das Anbaugerätehubwerk (14) in einer den zweiten Höchstwert (h_{2,max}) überschreitenden Betriebsstellung befindet.

2. Verfahren nach Anspruch 1, **dadurch gekennzeichnet, dass** über eine mit der Kontrolleinheit (42) in Verbindung stehende Bedienerschnittstelle (52) ein Fahrerhinweis dahingehend ausgegeben wird, die Betriebsstellung des Anbaugerätehubwerks (14) entsprechend dem zweiten Höchstwert (h_{2,max}) zu verringern.

3. Verfahren nach Anspruch 2, **dadurch gekennzeichnet, dass** die dem zweiten Höchstwert (h_{2,max}) entsprechende Verringerung der Betriebsstellung des Anbaugerätehubwerks (14) durch Eingreifen der Kontrolleinheit (42) in die Hubwerkssteuerung (32) automatisiert durchgeführt wird.

## Claims

1. Method for operating a power take-off shaft of an agricultural tractor having an attachment hoist, a power take-off shaft (16) spatially assigned to the attachment hoist (14), and first and second sensor means (44, 46) for providing operating information which characterizes an operating state of the power take-off shaft (16) and an operating position of the attachment hoist (14), wherein, on the basis of the provided operating information, an upper operating position (36) of the attachment hoist (14) is restricted to a maximum admissible first maximum value (h_{1,max}) by a control unit (42) by engagement in a hoist controller (32) if the power take-off shaft (16) is not in operation, and is restricted to a lower second maximum valve (h_{2,max}) than the first maximum value (h_{1,max}) if the power take-off shaft (16) is in operation, wherein operation of the power take-off shaft (16) by the control unit (42) is prevented by engagement in a power take-off shaft controller (50) as long as the attachment hoist (14) is located in an operating position which exceeds the second maximum value (h_{2,max}) .

2. Method according to Claim 1, **characterized in that**, via an operator interface (52) connected to the control unit (42), an indication is issued to the user to reduce the operating position of the attachment hoist (14) in accordance with the second maximum value (h_{2,max}) .

3. Method according to Claim 2, **characterized in that** the reduction, corresponding to the second maximum value (h_{2,max}) , of the operating position of the attachment hoist (14) is carried out in an automated manner by engagement of the control unit (42) in the hoist controller (32).

## Revendications

1. Procédé pour faire fonctionner une prise de force d'un tracteur agricole comprenant un mécanisme de levage d'éléments rapportés, une prise de force (16) associée spatialement au mécanisme de levage d'éléments rapportés (14) ainsi que des premier et deuxième moyens de détection (44, 46) destinés à fournir des informations de fonctionnement, lesquelles caractérisent un état de fonctionnement de la prise de force (16) ainsi qu'une position de fonctionnement du mécanisme de levage d'éléments rapportés (14), une position de fonctionnement haute (36) du mécanisme de levage d'éléments rapportés (14) étant limitée par une unité de contrôle (42), sur la base des informations de fonctionnement fournies, à une première valeur la plus haute (h_{1,max}) maximale admissible par intervention dans une commande de mécanisme de levage (32) lorsque la prise de force (16) n'est pas en fonctionnement, et limitée à une deuxième valeur la plus haute (h_{2,max}), plus faible que la première valeur la plus haute (h_{1,max}), lorsque la prise de force (16) est en fonctionnement, un fonctionnement de la prise de force (16) étant inhibé par l'unité de contrôle (42) par intervention dans une commande de prise de force (50) tant que le mécanisme de levage d'éléments rapportés (14) se trouve dans une position de fonctionnement qui dépasse la deuxième valeur la plus haute (h_{2,max}).

2. Procédé selon la revendication 1, **caractérisé en ce qu'**une consigne au conducteur est délivrée par le biais d'une interface utilisateur (52) qui se trouve en liaison avec l'unité de contrôle (42) en vue de réduire la position de fonctionnement du mécanisme de levage d'éléments rapportés (14) conformément à la deuxième valeur la plus haute (h_{2,max}).

3. Procédé selon la revendication 2, **caractérisé en ce que** la réduction de la position de fonctionnement du mécanisme de levage d'éléments rapportés (14) conformément à la deuxième valeur la plus haute (h_{2,max}) est effectuée de manière automatisée par intervention de l'unité de contrôle (42) dans la commande de mécanisme de levage (32) .
